# EUROPÄISCHE PATENTSCHRIFT

(11) **EP 0 426 986 B1**
(45) Veröffentlichungstag und Bekanntmachung des Hinweises auf die Patenterteilung: **27.11.1996**
(21) Anmeldenummer: 90118690.8
(22) Anmeldetag: 28.09.1990
(51) Int. Cl.: C11D 1/12, C11D 3/20, C11D 1/14

(54) **Reinigungslösung**
Cleaning solution
Solution de nettoyage

(30) Priorität: 29.09.1989 DE 3932641
(43) Veröffentlichungstag der Anmeldung: 15.05.1991
(73) Patentinhaber: BOEHRINGER MANNHEIM GMBH, 68298 Mannheim (DE)
(72) Erfinder: Pinsl-Ober, Judith, Dr., W-8132 Tutzing (DE); Schenk, Roland, Dr., W-8120 Weilheim (DE)
(74) Vertreter: Huber, Bernhard, Dipl.-Chem.

(56) Entgegenhaltungen:
- WO-A-81/01969
- FR-A- 2 281 424

## Beschreibung

Die Erfindung betrifft die Verwendung einer Reinigungslösung zur Reinigung von diagnostischen Analysensystemen für die Immunologie und klinische Chemie.

In diagnostischen Analysensystemen für Immunologie und klinische Chemie müssen Systembestandteile möglichst für eine Vielzahl verschiedenartiger Tests zu verwenden sein, ohne daß die nachfolgenden Tests von den "Vorgängern" beeinflußt werden, d.h. ohne daß eine sogenannte Verschleppung auftritt. Wenn man die Verwendung von "Einmalartikeln" vermeiden will, ist es daher notwendig, die "verschmutzten" Systembestandteile zu reinigen. Für ein rasches und effizientes Arbeiten soll bei Analysenautomaten die vom Gerät her mögliche Analysenfrequenz möglichst erreicht werden. Die anhaftenden Verschmutzungen (insbesondere Proteine) müssen deshalb innerhalb kürzester Zeit vollständig entfernt werden. Die Wirksamkeit der Reinigung soll also sehr schnell eintreten (möglichst innerhalb weniger Sekunden) und sich auf eine Vielzahl von Proteinen (Enzyme, Antikörper, Konjugate) erstrecken, die sich ihrerseits an einer Vielzahl von Materialien (Kunststoffe, wie z.B. Polymethylmethacrylat oder Teflon, Edelstahl, Glas usw.) adsorbieren können.

Typische Problempunkte sind hierbei insbesondere die bei Analysensystemen auftretenden Verschleppungsprobleme, wie eine Küvettenverschleppung ((a) Reagenz zur Probe, (b).Reagenz zum Reagenz, (c) Probe zur Probe), oder eine Nadelverschleppung (einschließlich Schläuche, Spritzen und Ventile; von (d) Reagenz zur Probe, (e) Probe zur Probe, (f) Reagenz zu Reagenz).

Die WO 81/01969 beschreibt ein Verfahren zur Reinigung von künstlichen Gebissen unter Verwendung einer Reinigungslösung, die 6 bis 32 Gew.-% Zitronensäure, ein Benetzungsmittel und Isopropanol enthält. Zahnstein und Zahnbelag werden dabei vom Gebißmaterial (Polyacrylharz) durch Eintauchen des Gebisses in die Reinigungslösung für 4 Minuten bis 8 Stunden und anschließendes Abbürsten entfernt.

Zur Reinigung diagnostischer Analysenautomaten bediente man sich bisher spezieller Reinigungsprozesse (vgl. z.B. DE-A-32 38 679; US-A-4 444 598; DD-C-3 238 679, DD-A-154 134 und US-A-4 248 642), oder es wurden für einzelne Komponenten der Analysensysteme spezielle Reinigungslösungen eingesetzt, wie z.B. für Elektroden (vgl. JA-A-57 067 856 und JA-B-88 002 343).

Aufgabenstellung der vorliegenden Erfindung ist deshalb die Verwendung eines Reinigungsmittels für diagnostische Analysengeräte, das die Anwendung spezieller Reinigungsverfahren vermeidet und für alle Bestandteile des Analysensystems anwendbar ist, und mit dem sich Verschleppungsprobleme einfach und auf breiter Basis lösen lassen. Die Reinigungslösungen sollten in diagnostischen Analysenautomaten für klinisch-chemische Tests bzw. immunchemische Tests auf breiter Basis insbesondere die folgenden Punkte erfüllen:
- Reinigung innerhalb weniger Sekunden;
- Beseitigung der verschiedensten Verunreinigungen durch Proteine in Küvetten, Dosiernadeln und Schlauchsystemen mit einer einzigen Reinigungslösung;
- die Reinigungswirkung soll auf den verschiedenen Materialien, wie sie für die vorstehend genannten Komponenten diagnostischer Analysenautomaten verwendet werden, d.h. Glas, Kunststoffe, Edelstahl usw., gleich gut vorhanden sein;
- es soll keine Beeinflussung der diagnostischen Tests durch die Reinigungslösung auftreten; und
- das Reinigungsmittel soll eine ausreichende bakterizide und fungizide Wirkunq aufweisen.

Diese Aufgabenstellung wird mit dem Gegenstand der vorliegenden Erfindung gemäß Anspruch 1 gelöst.

Gegenstand der Erfindung ist die Verwendung einer Reinigungslösung für diagnostische Analysengeräte, die dadurch gekennzeichnet ist, daß sie ein schnellnetzendes Tensid, ausgewählt aus der Gruppe Sulfobernsteinsäureester, Fluortenside und sekundäre Alkansulfonate mit einer Benetzungszeit (nach dem Draves-Test) von weniger als 20 Sekunden bei einer Konzentration von 0.3 Gew.-% des Tensids bei 25°C und eine anorganische oder organische Säure mit einem pKs-Wert von größer als 2.5 enthält, und einen pH-Wert von maximal 4.0 aufweist.

Als schnellnetzendes Tensid wird ein solches aus der Gruppe Sulfobernsteinsäureester (wie z.B. in EP-A 0 071 410, 0 071 411 und 0 071 413 beschrieben), Fluortenside (wie z.B. in Seifen-Öle-Fette-Wachse 104 (1978) 429-432 beschrieben) und sekundäre Alkansulfonate (vorzugsweise mit 12 bis 18 Kohlenstoffatomen) verwendet. Es können auch zwei oder mehrere Tenside verwendet werden.

Bevorzugt werden dabei solche Tenside eingesetzt, die neben einer Benetzungszeit, gemessen nach dem Draves-Test (Draves-Netzzeit; vgl. Beispiel 8) bei einer Konzentration von 0.3 Gew.-%, von kleiner 20 Sekunden, insbesondere kleiner oder gleich 10 Sekunden, bei der wirksamen Konzentration in der Reinigungslösung eine Grenzflächenspannung von <45 mN/m aufweisen.

Erfindungsgemäß besonders bevorzugte Tenside sind Dihexylnatriumsulfosuccinat (DHSS), Dioctylnatriumsulfosuccinat (DOSS), Tetraethylammoniumperfluoroctansulfonat (TAPS) und Natriumdodecyl-2-sulfonat.

Die Konzentration der Tenside in der Reinigungslösung ist nicht besonders kritisch und kann in einem großen Bereich schwanken. Sie richtet sich insbesondere nach der Art der erfindungsgemäß eingesetzten Tenside, aber auch nach der Art und Konzentration der übrigen Bestandteile der erfindungsgemäßen Reinigungslösung. Die Tensid-Konzentration liegt in der Regel im Bereich von 0.01 Gew.-% bis zur Konzentration der Löslichkeitsgrenze des Tensids in der Lösung, insbesondere zwischen 0.05 und 1.0 Gew.-%, und in erster Linie zwischen 0.1 und 0.5 Gew.-%. In der Regel wird bereits bei Konzentrationen von ca. 0.5 Gew.-% oder auch schon darunter eine maximale Wirksamkeit erreicht, so daß höhere Konzentrationen, die zwar auch noch zum gleichen Effekt führen, nicht erforderlich und aus wirtschaftlichen und Umwelt-Gesichtspunkten auch wenig sinnvoll sind. Die Tenside sollen bei einer wirksamen Konzentration, insbesondere bei einer Konzentration mit maximaler Wirkung, eine ausreichende Löslichkeit in Wasser besitzen, und vorzugsweise sollen sie im sauren Bereich bei pH-Werten von <4 wirksam sein.

Als Säuren werden mittelstarke Säuren mit einem pKₛ-Wert von >2.5 eingesetzt, vorzugsweise organische Säuren, insbesondere aus der Gruppe gegebenenfalls substituierter Mono-, Di-, Tri-Carbonsäuren. Substituierte Carbonsäuren sind vorzugsweise Hydroxycarbonsäuren. Bevorzugte Beispiele für erfindungsgemäß eingesetzte Säuren sind Citronensäure, Weinsäure, Bernsteinsäure usw., aber auch z.B. Ameisensäure, Essigsäure usw. Es können auch zwei oder mehrere Säuren eingesetzt werden.

Die Konzentration der Säuren in der erfindungsgemäßen Reinigungslösung kann ebenfalls in einem weiten Bereich variieren. Die zweckmäßigste Konzentration ist insbesondere von der Art der verwendeten Säuren, aber auch von den übrigen Bestandteilen, insbesondere vom verwendeten Tensid, abhängig. Vorzugsweise liegen die Säuren in einer Konzentration im Bereich von 0.001 mol/l bis 0.5 mol/l Reinigungslösung vor, und insbesondere im Bereich von 0.01 bis 0.1 mol/l Reinigungslösung.

Da die Wirksamkeit der erfindungsgemäß verwendeten Reinigungslösungen im allgemeinen mit steigenden pH-Werten abnimmt, sollte der pH-Wert der Reinigungslösung den Wert von 4 nicht überschreiten.

Die Herstellung der erfindungsgemäß verwendeten Reinigungslösungen kann auf an sich bekannte Weise durch Auflösen der Bestandteile erfolgen, wobei die Tenside und die Säuren gleichzeitig oder auch hintereinander gelöst werden können. Vorzugsweise wird als erster Bestandteil das Tensid gelöst. Es kann auch zweckmäßig sein, die Auflösung eines oder aller Bestandteile bei erhöhter Temperatur vorzunehmen. Für die Verwendung der erfindungsgemäßen Reinigungslösungen in diagnostischen Analysensystemen wird ein für derartige Reinigungsoperationen übliches vollentsalztes Wasser verwendet.

Die erfindungsgemäß verwendeten Reinigungslösungen zeichnen sich durch eine schnelle und gute Reinigungswirkung auf breiter Basis aus. Sie wirken für alle Komponenten eines diagnostischen Analysenautomaten, die mit Probenmaterialien (Serum, Plasma usw.) und Testreagenzien in Berührung kommen, und sind deshalb für eine Verwendung als Reinigungslösung für diagnostische Analysensysteme, insbesondere Analysenautomaten, hervorragend geeignet. Die erfindungsgemäßen Reinigungslösungen weisen insbesondere die folgenden, insbesondere für einen Einsatz in diagnostischen Analysensystemen gewünschten Eigenschaften auf:
- Es ist eine Reinigung der verschiedenen Komponenten eines diagnostischen Analysenautomaten mit einer einzigen Reinigungslösung möglich;
- die Reinigung erfolgt innerhalb von Sekunden;
- es ist die Beseitigung von proteinhaltigen Verunreinigungen verschiedenster Art, wie sie in diagnostischen Anylsenautomaten in der klinischen Chemie und Immunologie auftreten, möglich, und eine Beseitigung dieser Verunreinigungen ist von den verschiedensten Materialien, die in diagnostischen Analysenautomaten verwendet werden, möglich;
- sie zeigen ein sehr gutes Auswaschverhalten, wodurch keine Beeinflussung der nachfolgenden diagnostischen Tests auftritt,
- sie besitzen bakterizide und fungizide Wirkung.

Die nachfolgenden Beispiele sollen die Erfindung näher beschreiben, ohne sie darauf zu beschränken. Vor- und nachstehend beziehen sich, wenn nicht anders angegeben, Prozent- und Mengenangaben auf das Gewicht, Temperaturangaben auf die Celsius-Skala.

Es werden folgende Abkürzungen verwendet:
- CS: = Citronensäure,
- WS: = Weinsäure.

### Beispiel 1

### Herstellung von Reinigungslösungen

Reinigungslösung 1 wird hergestellt aus 0.2 % Dihexylnatriumsulfosuccinat (DHSS) (Draves-Netzzeit bei 25°C 10 Sekunden (vgl. Beispiel 8); Grenzflächenspannung 42 mN/m) und 25 bis 50 mmol/l Citronensäure (pKₛ₁ = 3.13).

Reinigungslösung 2 wird hergestellt aus 0.2 Gew.-% Dioctylnatriumsulfosuccinat (DOSS) (Draves-Netzzeit <0.2 Sekunden bei 25°C; Grenzflächenspannung 28 mN/m) und 25 bis 50 mmol/l Citronensäure (pKₛ₁ = 3.13).

Reinigungslösung 3 wird hergestellt aus 0.1 Gew.-% Tetraethylammoniumperfluoroctansulfonat (TAPS) Draves-Netzzeit <20 sec bei 25°C; Grenzflächenspannung 23 mN/m) und 25 bis 50 mmol/l Citronensäure (pKₛ₁ = 3.13).

Reinigungslösung 4 wird hergestellt aus 0.2 Gew.-% DHSS und 25 bis 50 mmol/l Weinsäure (pKₛ₁ = 3.11).

### Beispiel 2

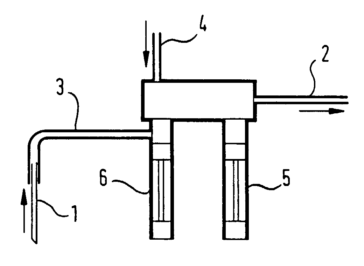

Am Beispiel eines in Figur 1 schematisch dargestellten immunochemischen Analysensystems wird der Reinigungsvorgang veranschaulicht. Es wird mit folgenden Stufen gearbeitet:
a) Aufnahme der Reinigungslösung (2500 µl) durch die Edelstahlnadel 1 (die zur Aufnahme von Reinigungslösung, Probe und Reagenzien dient) über den Teflonschlauch 3 und Ausstoß in die Abfalleitung 2.
b) Wiederholung des Vorgangs von a)
   Die Gesamteinwirkungszeit beträgt 20 Sekunden.
c) Nachspülen mit destilliertem Wasser (durch die Nadel 1 und die Zuführung 4);
d) Wiederholung des Vorgangs von c).

### Zweck der Reinigung:

Nach der Pipettierung von z. B. Peroxidase-haltigen Reagentien muß das Pipettiersystem (1, 3, 5) so effizient gereinigt werden, daß mit demselben Pipettiersystem ein Reagenz, welches Peroxidase durch Farbbildung nachweist (Substrat), pipettiert werden kann. Voraussetzung hierfür ist also, daß alle Oberflächen des Systems, an die die genannten Peroxidase-haltigen Reagentien adsorbiert sein können, praktisch quantitativ gereinigt werden, um eine Farbreaktion im Pipettiersystem zu vermeiden. Die Minimierung der Signalzunahme des Substrats im Schlauchleitungssystem nach 20 min Standzeit ist ein Maß für die Güte der Reinigung.

### Beispiel 3

Es wird die Anwendung einer erfindungsgemäßen Reinigungslösung am Beispiel eines Analysensystems beschrieben.

### Durchführung der Reinigung:

a) Die Küvetten (aus Polymethylmethacrylat, sofern nicht anders angegeben) werden mit der Lösung, deren Verschleppung geprüft werden soll, über eine Stahlnadel in 10 Sekunden befüllt.
b) Die so gefüllte Küvette wird für 10 min bei Raumtemperatur inkubiert und anschließend innerhalb 10 Sekunden mit einer Stahlnadel ausgesaugt.
c) Reinigungslösung wird über eine andere Stahlnadel in die Küvette pipettiert; Einwirkzeit ca. 10 Sekunden;
d) die Küvetten werden dreimal abwechselnd leergesaugt und mit Wasser gefüllt (Einwirkzeit von Wasser ebenfalls ca. 10 Sekunden) und zum Schluß nochmals leergesaugt.
e) Über eine Farbreaktion, die spezifisch für die verschleppte Substanz ist, wird der Grad der Verschleppung bestimmt.

Zum Vergleich mit dem Stand der Technik wird anstelle der Reinigungslösung nach c) Wasser eingesetzt.

Als Verschleppungslösung wird eine Lösung von ca. 20000 U/l Lipase in 150 mmol/l Tris/Citrat-Puffer, pH 7,6 verwendet.

Die nachstehenden Tabellen 1 - 5 zeigen die überlegene Reinigungswirkung einer erfindungsgemäßen Reinigungslösung für die Verschleppung von Lipase.

**Tabelle 1**

| Wirksamer Konzentrationsbereich eines erfindungsgemäßen Tensids | | | |
|---|---|---|---|
| % Tensid¹⁾ | Veschleppung | | (U Lipase/l) |
| in Lösung | DHSS | DOSS | TAPS |
| 0.00 | 1200 | 1200 | 1200 |
| 0.10 | 190 | 300 | 200 |
| 0.20 | 0 | - | - |
| 0.50 | 0 | - | - |

| | | | |
|---|---|---|---|
| ¹⁾ jeweils in Gegenwart von 25 mmol/l Citronensäure | | | |

Die nachfolgende Tabelle 2 veranschaulicht die durch die erfindungsgemäße Kombination von Tensid und Säure auftretende synergistische Reinigungswirkung.

**Tabelle 2**

| Verschleppung (U Lipase/l) | | |
|---|---|---|
| Säuregehalt % | in 0.2 % DHSS-Lösung | in Wasser |
| 0.0 CS/WS | 1190 | 2000 |
| 0.2 CS | 560 | - |
| 0,5 CS | 0 | 1200 |
| 1,0 CS | 0 | - |
| 0,5 WS | 0 | 1080 |

Die nachfolgende Tabelle 3 zeigt die Wirksamkeit einer erfindungsgemäßen Reinigungslösung (Kombination Tensid und mittelstarke Säure) im Vergleich zu einer starken Säure.

**Tabelle 3**

| Verschleppung (U Lipase/l) | |
|---|---|
| Zusatz von (25 mmol/l) | in 0.2 % DHSS-Lösung |
| ohne Säure | 1190 |
| HCl | 650 (Vergleichswert für starke anorganische Säure) |
| CS | 0 |
| WS | 0 |
| Ameisensäure | 0 |
| Bernsteinsäure | 0 |

Die Tabelle 4 zeigt die Abhängigkeit der Wirksamkeit einer erfindungsgemäßen Reinigungslösung vom pH-Wert der Lösung (die Reinigungslösung nach Beispiel 1 wurde mit Citronensäure/Citratpuffer auf die angegebenen pH-Werte eingestellt).

**Tabelle 4**

| Verschleppung (U Lipase/l) | | | | |
|---|---|---|---|---|
| pH 2.3 | pH 2.6 | pH 3.0 | pH 4.0 | pH 5.0 |
| 0 | 0 | 0 | 200 | 1620 |

Die Tabelle 5 zeigt die Abhängigkeit der Wirksamkeit erfindungsgemäßer Reinigungsmittel von der Einwirkungszeit im Vergleich mit kommerziell erhältlichen, üblichen Reinigungsmitteln.

**Tabelle 5**

| Verschleppung (U Lipase/l) | | | | | | |
|---|---|---|---|---|---|---|
| Einwirkungszeit der Reinigungslösung (Sekunden) | Reinigungslösung 1,2,4 | Reinigungslösung 3 | Wasser | CS 0.5 % | Vgl.¹⁾ 1.0 % | Vgl.²⁾ 2.0 % |
| 10 | 0 | 200 | 2000 | 1200 | 1900 | 1060 |
| 20 | 0 | - | 600 | - | - | - |
| 600 | 0 | 0 | 400 | 210 | 200 | 100 |

| | | | | | | |
|---|---|---|---|---|---|---|
| 1) Extran^{R} AP43 | | | | | | |
| 2) Hitergent^{R} (Hersteller: Hitachi, Japan) | | | | | | |

### Beispiel 4

### Verschleppung in einen immunologischen Test

Es wird, wie in Beispiel 2 beschrieben, die Verschleppung eines Konjugats aus Peroxidase und Antikörpern in einen immunologischen Test überprüft. Dabei wird jedoch, in Abweichung von Beispiel 3, zweimal mit Reinigungslösung und zweimal mit Wasser gespült.

### Verschleppungslösung:

Konjugat aus Peroxidase und polyklonalen Antikörpern gegen TSH (40 U Peroxidase/l) in 15 mmol/l Phosphatpuffer pH 6,9

Die Überprüfung der Verschleppung erfolgt in einem Farbtest. Dazu wird nach Durchführung der Reinigung und Waschen, gem. Beispiel 2, Substratlösung (1,6 mmol/l ABTS (2,2'-Azino-di[3-ethylbenzthiazolin-sulfonsäure(6)]-diammoniumsalz), 95 mmol/l Phosphatcitratpuffer, pH 4,4, 3,1 mmol/l Natriumperborat) zugegeben, 20 min inkubiert und die Extinktion bei 422 nm bestimmt. Die Ergebnisse zeigt Tabelle 6.

Die Tabelle 6 zeigt die Wirksamkeit erfindungsgemäßer Reinigungsmittel im Vergleich zu kommerziell erhältlichen und üblichen Reinigungsmitteln am Beispiel einer Verschleppung von Peroxidase-Antikörper-Konjugaten.

**Tabelle 6**

| | Extinktion [mE] |
|---|---|
| Reinigungsmittel | |
| Reinigungslösung 1 | 0 |
| Reinigungslösung 2 | 0 |
| Vergleich ³⁾ | 215 |
| Vergleich ⁴⁾ | 198 |
| Wasser | 283 |
| (zu ^{1) 3)} und ⁴⁾ siehe Römpps Chemie-Lexikon, 8. Auflage, 1981, Seite 1230). | |

| | |
|---|---|
| ³⁾ 3 % Extran^{R} AP22 | |
| ⁴⁾ 3 % Extran^{R} MA01 | |

### Beispiel 5

### Reinigungswirkung bei verschiedenen Proteinen

Wie in Beispiel 3 beschrieben, wird die Verschleppung von drei verschiedenen Enzymen überprüft.

### a) Lactat-dehydrogenase-1-isoenzym

Als Verschleppungslösung werden 31 000 U/l Lactat-dehydrogenase-1-isoenzym in 0,43 mol/l Carbonatpuffer, pH 10,0 verwendet. Pipettier- und Waschschritte erfolgen wie in Beispiel 3 beschrieben. Die Bestimmung von verschlepptem Enzym erfolgt wie in Z. Clin. Chem. U. Clin. Biochem. 8 (1970), 658 und 10 (1972) 182 beschrieben. Danach wird eine Lösung von 49 mmol/l Phosphatpuffer, pH 7,5, 0,17 ml NADH und 0,6 mmol/l Pyruvat zugesetzt, die Extinktion bei 365 nm bestimmt und die Enzymaktivität ermittelt.

### Lactat-dehydrogenase (LDH)

Die LDH-Bestimmung erfolgt analog zu der Bestimmung von Lactat-dehydrogenase-1-isoenzym.

### Cholesterin-Oxidase

Als Verschleppungslösung wird eine Lösung von 240 U/l Cholesterinoxidase in 100 mmol/l Tris-Puffer, pH 7,7 verwendet. Die Durchführung der Bestimmung erfolgt wie in Clin. Chem. 29 (1983) 1075 beschrieben. Das hierfür erforderliche Reagenz zur Bestimmung von Cholesterin wird ohne Zusatz von Cholesterin-Oxidase eingesetzt. Wird Cholesterinoxidase verschleppt, so wird eine Farbbildung beobachtet.

### Zusammensetzung des Reagenzes

100 mmol/l Tris-Puffer, pH 7,7
50 mmol/l Magnesiumchlorid
1 mmol/l 4-Aminophenazon
10 mmol/l Natriumcholat
6 mmol/l Phenol
4 mmol/l 3,4-Dichlorphenol
0,6 % Fettalkohol-Polyglykoläther
0,4 U/ml Cholesterinesterase
0,2 U/ml Peroxidase

Die Tabelle 7 zeigt die Wirkung erfindungsgemäßer Reinigungsmittel im Vergleich zu Wasser auf die Beseitigung von Verunreinigungen der verschiedensten Art.

**Tabelle 7**

| Verschleppung (U/l) | | | |
|---|---|---|---|
| Verschleppung | Reinigungslösungen | | Wasser |
| von | 1, 4 | 3 | |
| Lactat-Dehydrogenase-1-Isoenzym | 0 | 0 | 50 |
| Lactat-Dehydrogenase | 0 | 0 | 500 |
| Cholesterinoxidase | 0 | | 20 |

### Beispiel 6

### Verschleppung von Lipase bei Verwendung von Gefäßen aus verschiedenen Materialien

**Versuchsdurchführung analog Beispiel 3** und Beispiel 2

**Tabelle 8**

| Verschleppung von Lipase (U/l) | | |
|---|---|---|
| Material | Reinigungslösung 1 | Wasser |
| Polymethylmethacrylat | 0 | 2000 |
| Glas | 0 | 700 |
| Edelstahl | 0 | 300 |
| Polytetrafluorethylen*) | 0*) | 100*) |

| | | |
|---|---|---|
| *) U Peroxidase/l | | |

### Beispiel 7

### Draves-Test

Der Draves-Test ist ein Verfahren zur Bestimmung der relativen Benetzungskraft von Tensidlösungen an einem Baumwollband. 1 Gew.-% wäßrige Lösungen des zu untersuchenden Detergens werden mit deionisiertem Wasser bei 25°C bei ± 1°C hergestellt. Die Lösungen werden anschließend auf 0,3 Gew.-% verdünnt.

Ein Meßzylinder wird mit 550 ml der verdünnten Tensidlösung gefüllt. Ein Haken des Gewichts 1 g wird an einem 40 g schweren Gewicht über einen ein Zoll langen Nylonfaden befestigt. Der Haken wird im Abstand von 0,25 Zoll vom Ende eines Baumwollbandes (Synthron) der Länge 9 Zoll befestigt. Das Gewicht mit dem anhängenden Band wird in den Meßzylinder gesenkt (Gewicht taucht ein) bis das Ende des Bandes gerade über der Oberfläche der Lösung ist. Dann wird das gesamte Teil fallengelassen. In dem Augenblick, wenn das Gewicht den Boden berührt, wird die Stoppuhr gestartet und angehalten, wenn das Band mit einer konstanten Geschwindigkeit sinkt. Das gemessene Zeitintervall wird als Benetzungszeit definiert.

## Patentansprüche

1. Verwendung einer wäßrigen Reinigungslösung, welche ein schnellnetzendes Tensid, ausgewählt aus der Gruppe Sulfobernsteinsäureester, Fluortenside und sekundäre Alkansulfonate mit einer Benetzungszeit (nach dem Draves-Test) von weniger als 20 Sekunden bei einer Konzentration von 0,3 Gew.-% und 25°C, und eine anorganische oder organische Säure mit einem pKₛ-Wert von > 2,5 enthält, und einen pH-Wert von maximal 4,0 aufweist, zur Reinigung von diagnostischen Analysesystemen.

2. Verwendung einer Reinigungslösung nach Anspruch 1,
**dadurch gekennzeichnet**,
daß das Tensid Dihexylnatriumsulfosuccinat (DHSS), Dioctylnatriumsulfosuccinat (DOSS) und/oder Tetraethylammoniumperfluoroctansulfonat (TAPS) ist.

3. Verwendung einer Reinigungslösung nach Anspruch 1 oder 2,
**dadurch gekennzeichnet**,
daß das Tensid in einer Menge von 0,05 bis 1,0 Gew.-%, bezogen auf die Reinigungslösung, vorliegt.

4. Verwendung einer Reinigungslösung nach Anspruch 3,
**dadurch gekennzeichnet**,
daß das Tensid in einer Menge von 0,1 bis 0,5 Gew.-% vorliegt.

5. Verwendung einer Reinigungslösung nach einem der Ansprüche 1 bis 4,
**dadurch gekennzeichnet**,
daß die Säure eine organische Säure ist.

6. Verwendung einer Reinigungslösung nach Anspruch 5,
**dadurch gekennzeichnet**,
daß die Säure ausgewählt ist aus der Gruppe Mono-, Di-, Tri-Carbonsäuren und Hydroxycarbonsäuren.

7. Verwendung einer Reinigungslösung nach Anspruch 6,
**dadurch gekennzeichnet**,
daß die Säure Citronensäure, Weinsäure und/oder Bernsteinsäure ist.

8. Verwendung einer Reinigungslösung nach einem der Ansprüche 5 bis 7,
**dadurch gekennzeichnet**,
daß die Säure in einer Menge von 0,001 Mol/l bis 0,5 Mol/l Reinigungslösung vorliegt.

9. Verwendung einer Reinigungslösung nach Anspruch 8,
**dadurch gekennzeichnet**,
daß die Säure in einer Menge von 0,01 bis 0,1 Mol/l Reinigungslösung vorliegt.

## Claims

1. Use of an aqueous cleaning solution, which contains a rapidly wetting surfactant chosen from the group of sulphosuccinic acid ester, fluorosurfactants and secondary alkanesulphonates having a wetting time (according to the Draves Test) of less than 20 seconds at a concentration of 0.3 % by weight and 25°C, and an inorganic or organic acid with a pKₛ value of > 2.5 and which has a maximum pH value of 4.0 to clean diagnostic analyzer systems.

2. Use of a cleaning solution as claimed in claim 1,
**wherein**
the surfactant is sodium dihexyl sulphosuccinate (DHSS), sodium dioctyl sulphosuccinate (DOSS) and/or tetraethylammonium perfluoro-octane sulphonate (TAPS).

3. Use of a cleaning solution as claimed in claim 1 or 2, **wherein**
the surfactant is present in an amount from 0.05 to 1.0 % by weight in relation to the cleaning solution.

4. Use of a cleaning solution as claimed in claim 3,
**wherein**
the surfactant is present in an amount from 0.1 to 0.5 % by weight.

5. Use of a cleaning solution as claimed in one of the claims 1 to 4,
**wherein**
the acid is an organic acid.

6. Use of a cleaning solution as claimed in claim 5,
**wherein**
the acid is chosen from the group of the mono-, di-, tricarboxylic acids and hydroxycarboxylic acids.

7. Use of a cleaning solution as claimed in claim 6,
**wherein**
the acid is citric acid, tartaric acid and/or succinic acid.

8. Use of a cleaning solution as claimed in one of the claims 5 to 7,
**wherein**
the acid is present in an amount from 0.001 mol/l to 0.5 mol/l cleaning solution.

9. Use of a cleaning solution as claimed in claim 8,
**wherein**
the acid is present in an amount from 0.01 to 0.1 mol/l cleaning solution.

## Revendications

1. Utilisation d'une solution aqueuse de nettoyage qui contient un tensioactif à mouillage rapide, choisi dans le groupe des esters de l'acide sulfosuccinique, des tensioactifs fluorés et des alcanesulfonates secondaires avec un temps de mouillage (selon le test de Draves) inférieur à 20 secondes à une concentration de 0,3% en masse et à 25°C, et un acide inorganique ou organique d'un pK_{A} > 2,5, et qui présente un pH de 4,0 au maximum, pour le nettoyage des systèmes d'analyse diagnostiques.

2. Utilisation d'une solution de nettoyage selon la revendication 1, caractérisée en ce que le tensioactif est le dihexylsulfosuccinate de sodium (DHSS), le dioctylsulfosuccinate de sodium (DOSS) et/ou le perfluorooctanesulfonate de tétraéthylammonium (TAPS).

3. Utilisation d'une solution de nettoyage selon la revendication 1 ou 2, caractérisée en ce que le tensioactif est présent en une quantité de 0,05 à 1,0% en masse par rapport à la solution de nettoyage.

4. Utilisation d'une solution de nettoyage selon la revendication 3, caractérisée en ce que le tensioactif est présent en une quantité de 0,1 à 0,5% en masse.

5. Utilisation d'une solution de nettoyage selon l'une des revendications 1 à 4, caractérisée en ce que l'acide est un acide organique.

6. Utilisation d'une solution de nettoyage selon la revendication 5, caractérisée en ce que l'acide est choisi dans le groupe des acides mono-, di-, tricarboxyliques et des acides hydroxycarboxyliques.

7. Utilisation d'une solution de nettoyage selon la revendication 6, caractérisée en ce que l'acide est l'acide citrique, l'acide tartrique et/ou l'acide succinique.

8. Utilisation d'une solution de nettoyage selon l'une des revendications 5 à 7, caractérisée en ce que l'acide est présent en une quantité de 0,001 mol/l à 0,5 mol/l de solution de nettoyage.

9. Utilisation d'une solution de nettoyage selon la revendication 8, caractérisée en ce que l'acide est présent en une quantité de 0,01 à 0,1 mol/l de solution de nettoyage.
